# EUROPÄISCHE PATENTSCHRIFT

(11) **EP 2 843 278 B1**
(45) Veröffentlichungstag und Bekanntmachung des Hinweises auf die Patenterteilung: **22.08.2018**
(21) Anmeldenummer: 14002497.7
(22) Anmeldetag: 18.07.2014
(51) Int. Cl.: F16K 31/163, F15B 15/06

(54) **Drehantrieb**
Rotary drive
Entraînement rotatif

(30) Priorität: 18.07.2013 CH 12842013
(43) Veröffentlichungstag der Anmeldung: 04.03.2015
(73) Patentinhaber: Zermec Engineering GmbH, 5080 Laufenburg (CH)
(72) Erfinder: Knecht, Michael, CH-5080 Laufenburg (CH); Knecht, Stefan, CH-5080 Laufenburg (CH)
(74) Vertreter: Alder, Hans Rudi

(56) Entgegenhaltungen:
- WO-A1-85/04459
- DE-A1- 2 508 683
- US-A- 3 204 920
- US-A- 3 452 961

## Beschreibung

Die vorliegende Erfindung betrifft einen pneumatischen Drehantrieb für ein Absperr-Organ zum Schliessen und Öffnen eines Förderkanals einer Absperr-Vorrichtung gemäss Oberbegriff des Anspruchs 1. Ein solcher Drehantrieb ist beispielsweise bekannt aus der US 3,204,920.

Solche Drehantriebe finden ihre Verwendung im Wesentlichen als Antrieb für Absperrklappen in Absperr-Ventilen, resp. Klappen-Armaturen von Lagerbehältern für die Industrie, insbesondere die chemische und pharmazeutische Industrie und sind in ihrer Funktionsweise hinlänglich bekannt. Ein solches Absperr-Ventil ist bspw. in der EP-1'213'244 beschrieben. Es versteht sich, dass in der chemischen und pharmazeutischen Industrie manuelle Operationen in den Fertigungshallen wegen möglicher gesundheitlicher Beeinträchtigungen möglichst vermieden werden.

Es sind deshalb pneumatische und hydraulische Drehantriebe bekannt, um die Absperrklappen dieser Absperrventile automatisch betätigen zu können. Bspw. wird in der DE-202004003694 U ein Drehantrieb (Zahnstangen-/Ritzel-Prinzip) beschrieben, welcher zwei gegenläufig verschiebbare Kolben umfasst, an denen je eine Kolbenverlängerung befestigt ist. Diese Kolbenverlängerungen sind als zueinander parallel verlaufende Zahnstangen ausgebildet und treiben ein dazwischen angeordnetes Ritzel an, welches mit der Antriebswelle für das Absperr-Organ fest verbunden ist. Bei einem anderen, bspw. aus der DE-3925887 (mit Doppelschwinge) bekannten Drehantrieb tragen die jeweiligen Kolbenverlängerungen je einen Mitnehmernocken, welche gegenläufig in eine Schwenkscheibe, resp. Doppelschwinge greifen, um diese und die damit fest verbundene Antriebswelle zu drehen. Diese Drehantriebe nennt man einfachwirkend, wenn sie das Absperr-Ventil mit Druckluft öffnen und mit Federkraft schliessen oder umgekehrt, resp. sind doppelwirkend, wenn sie das Absperr-ventil mit Druckluft sowohl schliessen als auch öffnen.

Leider genügen diese Drehantriebe den Anforderungen der heutigen Industrie an das Drehmomentvermögen, die Baugrösse und das Gewicht nicht mehr. Insbesondere erfordern die bekannten Bauweisen unerwünscht grosse Abmessungen und sind schwergewichtig. Dabei weisen die Drehantriebe nach dem Zahnstange-/Ritzel-Prinzip gemäss der DE-202004003694 U über den gesamten Drehwinkelbereich (0° bis 90°) ein konstantes Drehmoment (bspw. 330 Nm) auf. Die Drehantriebe mit einer Doppelschwinge gemäss DE-39'25'887 weisen ein unerwünscht niedriges Drehmoment (von bspw. 250 Nm) bei 0° und 90° auf, welches ausserdem über den gesamten Drehwinkelbereich gesehen cosinusförmig einbricht (bis bspw. 150Nm). Die Schliesskraft dieser Drehantriebe lässt sich nicht in einfacher Weise verändern, d.h. wird im Wesentlichen durch die Abmessungen der Drehantriebe bestimmt.

Darüber hinaus lässt es sich bei diesen bekannten Systemen in der Praxis nicht vermeiden, dass die damit angetriebenen Schliessorgane bei rieselfähigem, insbesondere pulverigem Füllgut, nicht vollständig schliessen, d.h. die korrekte Schliessstellung nicht eingenommen wird. Das kann daran liegen, dass bei diesen Drehantrieben die erforderliche Schliesskraft nicht ausreicht, wenn das Gewicht des darüber liegenden Füllgutes zu gross ist und/oder die Körnigkeit des Füllgutes eine erhöhte Schliesskraft erfordert.

Es ist das Bestreben der chemischen und pharmazeutischen Industrie möglichst kleindimensionierte und leichgewichtige Drehantriebe mit hoher Schliesskraft, d.h. Drehantriebe mit hohem Drehmoment-Vermögen und geringer Baugrösse einzusetzen.

Aufgabe der vorliegenden Erfindung ist es deshalb einen platzsparenden Drehantrieb für ein Absperr-Organ einer Absperr-Vorrichtung, resp. einer Klappen-Armatur zu schaffen, welcher die Nachteile der bekannten Drehantriebe nicht aufweist. Insbesondere soll ein platzsparender Drehantrieb geschaffen werden, dessen Schliesskraft in einfacher Weise so ausgelegt werden kann, dass diese für ein vorbestimmtes Füllgut den Förderkanal absolut dicht schliessen kann. Insbesondere sollen Massnahmen geschaffen werden, welche gewährleisten, dass das von einem solchen Drehantrieb betätigte Absperr-Organ den Förderkanal der mit diesem Antrieb versehenen Absperr-Vorrichtung auch bei rieselfähigem, insbesondere pulverigem Schüttgut vollständig schliesst.

Diese Aufgabe wird erfindungsgemäss mit einem Drehantrieb gelöst, welcher die Merkmale des Anspruchs 1 aufweist und insbesondere mit einem pneumatischen Drehantrieb, welcher eine Antriebwelle eines Absperr-Organs einer Absperr-Vorrichtung mit einem Förderkanal betätigt, wobei der Drehantrieb zwei in einem druckdichten Gehäuse einander gegenüberliegende, synchron und gegenläufig bewegbare Kolben aufweist, welche je über eine zwischen Kolben und Antriebswelle angeordnete Mitnehmer-Anordnung mit der Antriebswelle derart gekoppelt sind, dass die Linearbewegung der Kolben in eine Drehbewegung der Antriebswelle umgesetzt wird. Die Mitnehmer-Anordnung ist als Kniehebelmechanismus ausgebildet, welcher ein mit der Antriebswelle fest verbundenes Antriebselement und ein mit diesem Antriebselement und dem Kolben gelenkig verbundenes Schubelement aufweist. Erfindungsgemäß umfasst der Kniehebelmechanismus des Drehantriebs eine Kolbenführung, ein Schubelement und ein Antriebselement, welche über Drehzapfen gelenkig miteinander verbunden sind. Zur Abstützung der Querkräfte ist der Drehzapfen zwischen Kolbenführung und Schubelement mit mindestens einer konzentrisch angeordneten Rolle, insbesondere mit einem Rollenlager versehen. Diese Rollen sind in einer Führungsnut geführt, welche eine innere resp. äussere Lauffläche aufweist.

In einer besonderen Ausführungsform ist die Kolbenführung gelenkig mit dem Kolben verbunden und weist die Führungsnut, resp. deren Laufflächen, einen geschwungen Verlauf auf derart, dass die Hebelwirkung des Schubelementes im Bereich der Schliessstellung erhöht wird.

In einer alternativen Ausführungsform, bei welcher die Führungsnut einen geschwungenen Verlauf aufweist derart, dass die Hebelwirkung des Schubelementes im Bereich der Schliessstellung erhöht wird, ist der erste Drehzapfen verschiebbar gegen die Kolbenführung gelagert.

In einer bevorzugten Ausführungsform ist zwischen dem Kolben und seiner zugeordneten Gehäuse-Rückwand ein federelastisches Element, insbesondere ein Federelement vorgesehen, welches die Schliessbewegung des Kolbens unterstützt und/oder die Absperr-Vorrichtung bei einem ungewollten Druckabfall in seine Schliessstellung bringt.

In einer besonderen Weiterentwicklung des erfindungsgemässen Drehantriebs weist das mit diesem Drehantrieb betätigbare Absperr-Organ in seinem Aussenrand (Peripherie) eine periphere Sammel-Nut auf, um allfällig auf dem Aussenrand liegengebliebenes Schüttgut vorübergehend aufzunehmen und/oder ist der Förderkanal der mit dem erfindungsgemässen Drehantrieb aktivierbaren Absperr-Vorrichtung mit einer im Nahbereich der Schliessstellung des Absperr-Organs angebrachten Abstreifkante versehen, insbesondere um die Kontaktfläche zwischen dem Aussenrand des Absperr-Organs und der Innenfläche des Förderkanals schüttgutfrei zu halten. Das sich in diesen Nuten angesammelte Schüttgut lässt sich in einfacher Weise ausblasen, entweder bei jeder Öffnungsbewegung oder nur bei Notwendigkeit.

In einer Weiterbildung dieser bevorzugten Ausführungsform ist im Nahbereich der Schliessstellung des Absperr-Organs eine Abstreifkante eine Abstreifkante vorgesehen, welche mit der Sammelnut zusammenwirkt derart, dass auf dem Rand des Absperrorgans liegen gebliebenes Schüttgut beim Schliessen des Absperr-Organs abgestreift wird.

In einer wesentlichen Ausführungsform der vorliegenden Erfindung ist das Gehäuse (10) kolbenmittig und senkrecht zur Antriebswelle (9) trennbar ausgebildet. Dies erleichtert einerseits die Fertigung des drehantriebs, insbesondere der jeweiligen Führungsnuten und/oder andererseits allfällige Wartungsarbeiten.

Der vorgeschlagene Aufbau mit einem über einen Kniehebel aktivierbaren Antriebselement erlaubt es, dass das Drehmoment, resp. die Schliesskraft in der Schliessstellung, d.h. bei 90°, in einfacher Weise vorzubestimmen, resp. einzustellen ist und dieses wesentlich zu erhöhen ohne dafür die Abmessung des Antriebs erhöhen zu müssen. Die Werte des Drehmoments zwischen der Öffnungsstellung bei 0° (bspw. 270 Nm) und der Schliessstellung bei 90° (bspw. 600 Nm oder mehr) weisen einen überproportionalen, insbesondere progressiv ansteigenden Verlauf auf. Damit kann gewährleistet werden, dass das Absperr-Organ der Absperr-Vorrichtung in eine korrekt abdichtende Schliessstellung gebracht wird. Die Vorteile aus der bevorzugten Weiterbildung sind in der wiederholbaren Gewährleistung einer vollständigen und sicheren Schliessstellung zu sehen. Weitere Vorteile sind in den geringen Reibungsverlusten, dem geringen Verschleiss und dem platzsparenden Aufbau der erfindungsgemässen Konstruktion zu sehen. Solche Drehantriebe senken darüber hinaus die Herstellungskosten und den Lagerhaltungsaufwand beim Hersteller.

Vorliegend soll unter einer Absperr-Vorrichtung eine Vorrichtung, wie sie bspw. aus der WO2002/18248 oder der EP1'213'244 bekannt sind, verstanden werden, mit welcher die Auslauf- und Einlaufstutzen zweier Industrie-Container miteinander gekoppelt werden können derart, dass diese einen Durchflusskanal bilden, wobei in diesem Durchflusskanal ein von aussen betätigbares Absperr-Organ, bspw. in Form einer einfachen Schliessklappe, vorgesehen ist. Unter Absperr-Organ soll jede Form von Klappenarmatur verstanden werden, insbesondere auch in Form einer Doppelklappe, wie sie aus der EP-0'554'096 bekannt ist. Unter Mitnehmer-Anordnung soll hier eine Anordnung von Elementen, vorzugsweise mechanische Elemente, verstanden werden, mit welchen eine lineare Bewegung, bspw. eines Kolbens, in eine Drehbewegung, bspw. einer Antriebsachse, umgewandelt werden kann, wie bekannt aus der DE-U-20'2004003694 (Zahnstange mit Ritzel), aus der DE-3925887 (Nocken mit Schwenkscheibe) oder wie hier vorgeschlagen mit einem Kniehebelmechanismus.

Im Folgenden soll die Erfindung anhand eines Ausführungsbeispiels und mit Hilfe der Figuren näher erläutert werden. Dabei zeigt:
- Fig. 1:: eine schematische Darstellung einer räumlichen Ansicht einer Absperr-Vorrichtung bekannter Art;
- Fig. 2:: eine schematische Darstellung eines Längsschnittes durch einen erfindungsgemässen Drehantriebs in Schliessstellung;
- Fig. 3:: eine schematische Darstellung eines Längsschnittes durch einen erfindungsgemässen Drehantrieb in Offenstellung;
- Fig. 4:: eine schematische Darstellung eines Querschnittes durch einen erfindungsgemässen Drehantrieb;
- Fig. 5a-c:: Graphen zum Verlauf des Drehmomentes zwischen der Offenstellung bei 90° und der Schliessstellung bei 0° bei unterschiedlichen Drehantrieben;
- Fig. 6a-c:: schematische Darstellungen zur Funktionsweise einer Sammelnut im Förderkanal einer Absperr-Vorrichtung in unterschiedlichen Stellungen eines erfindungsgemäss aktivierbaren Absperr-Organs.

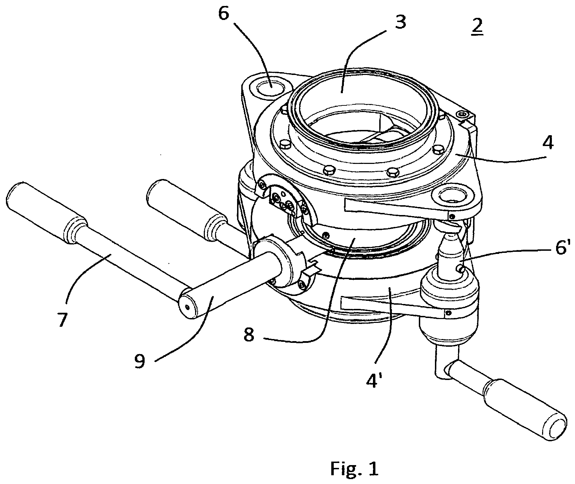

Die in Fig. 1 dargestellte Ansicht zeigt eine trennbare Absperr-Vorrichtung 2 mit einem oberen Kupplungsteil 4 und einem unteren Kupplungsteil 4', mit welchen die Auslauf- und Einlaufstutzen zweier Industrie-Container (nicht dargestellt) miteinander verbunden werden können. Diese beiden Kupplungsteile 4, 4' können über Verriegelungselemente 6, 6' miteinander fest verbunden werden derart, dass die Kupplungsteile 4, 4' einen Förderkanal 3 bilden. In diesem Förderkanal 3 ist ein über eine Antriebswelle 9 mit einem Antrieb 7, hier ein manueller Antrieb, drehbar angeordnetes Absperr-Organ, bspw. in Form einer einfachen Schliess- oder Absperrklappe 8 vorgesehen.

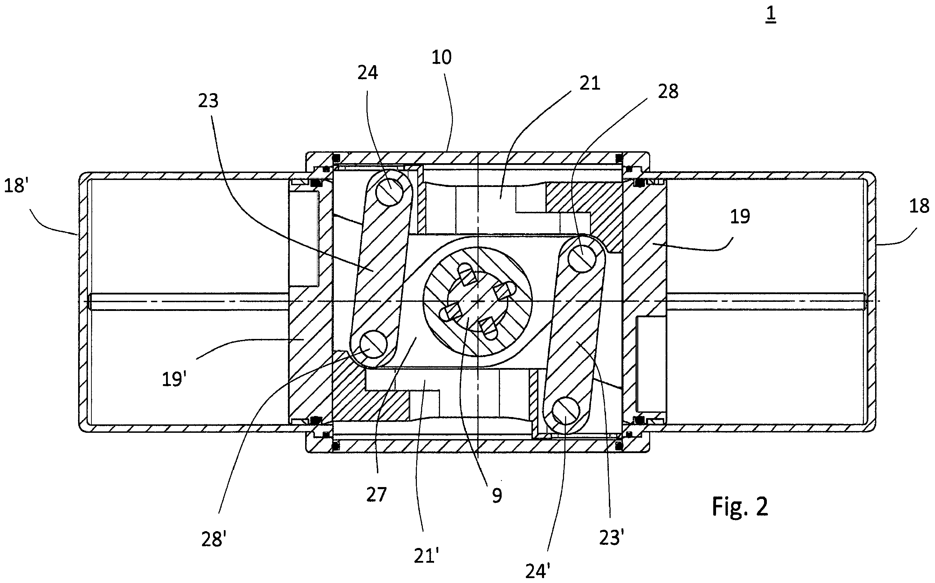

Fig. 2 zeigt schematisch den Aufbau einer bevorzugten Ausführungsform des erfindungsgemässen Drehantriebs 1 in Schliessstellung. Dieser Drehantrieb 1 weist zwei gegenläufig in einem druckdichten Gehäuse 10 gelagerte Kolben 19, 19' auf, welche je mit einer Kolbenführung 21, 21' fest verbunden sind. An jedem dieser Kolbenführungen 21, 21' ist ein Schubelement 23, 23' über einen ersten Drehzapfen 24, 24' angelenkt, welches Schubelement 23, 23' an seinem anderen Ende über einen zweiten Drehzapfen 28, 28' mit einem Antriebselement 27 wiederum gelenkig verbunden ist. Dieses Antriebselement 27 ist mit der Antriebswelle 9 für das Absperr-Organ fest verbunden. Dabei bilden die Kolbenführung 21, 21', das angelenkte Schubelement 23, 23' und das drehbar gelagerte Antriebselement 27 einen Kniehebelmechanismus. In der dargestellten Schliessstellung stehen die Kolbenführung 21, 21' und das Schubelement 23, 23' beinahe senkrecht zueinander, d.h. ist das von der Kolbenführung 21, 21' auf das Schubelement 23, 23' ausgeübte Drehmoment maximiert. Die Mitnehmer-Anordnung aus Kolbenführung 21, 21', Schubelement 23, 23' und Antriebselement 27 ist derart dimensioniert, dass in Schliessstellung ein maximiertes Drehmoment auf das Antriebselement 27 wirkt. Dieses Kniehebelprinzip gewährleistet, dass die erzeugte Schliesskraft beim Schliessen (von 90° nach 0°) winkelabhängig überproportional, d.h. progressiv zunimmt. Das Antriebselement 27 ist hier doppelnockenförmig ausgebildet, kann aber jede andere geeignete Form aufweisen, insbesondere als elliptische Scheibe ausgebildet sein.

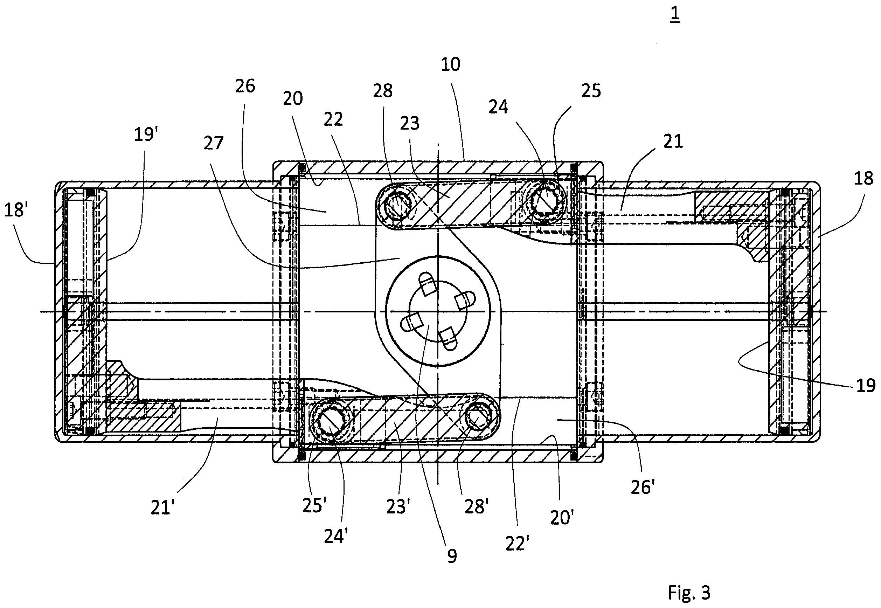

Fig. 3 zeigt denselben Ausschnitt des in Fig. 2 dargestellten Drehantriebs 1, jedoch in seiner Offenstellung. Dabei sind die beiden Kolben 19, 19' im Gehäuse 10 vollständig zurückgezogen. Durch die besonders gewählte geometrische Dimensionierung der Mitnehmer-Anordnung und deren Kniehebel-Mechanismus sind das Antriebselement 27 und damit die Antriebswelle 9 um 90° gegenüber der Schliessstellung gedreht. Die Schubelemente 23, 23' sind an ihren jeweiligen Enden mit einerseits dem Antriebselement 27 und andererseits der dazugehörigen Kolbenführung 21, 21' über geeignete Drehzapfen 28, 28' resp. 24, 24' gelenkig verbunden. Beim Schliessen werden die beiden Kolben 19, 19' mit Hilfe von Druckluft gegeneinander bewegt. Dabei wirkt die von den Kolbenführungen 21, 21' übertragene Schubkraft über die ersten Drehzapfen 24, 24' direkt auf die Schubelemente 23, 23', d.h. wirkt kein oder nur ein sehr geringes Drehmoment auf diese Schubelemente 23, 23'. Dabei beginnt sich das Antriebselement 27 um die Drehachse der Antriebswelle 9 zu drehen. Die erforderliche Kraft auf das Antriebselement 27 wird über die zweiten Drehzapfen 28, 28' übertragen. Um die Drehmoment-Gegenkräfte aufzufangen, ist auf der jeweiligen Drehachse der ersten Drehzapfen 24, 24' je eine Rolle 25, 25' vorgesehen. Diese Rollen 25, 25' rollen jeweils auf einer inneren 22, 22' resp. auf einer äusseren 20, 20' Lauffläche entlang einer je im Gehäuse 10 vorgesehenen Führungsnut 26, 26'.

In einer besonderen Ausführungsform des erfindungsgemässen Antriebs 1 sind die jeweiligen ersten Drehzapfen 24, 24' in der jeweiligen Kolbenführung 21, 21' verschiebbar gelagert und weist die äussere 20,20', resp. innere 22, 22' Lauffläche der jeweiligen Führungsnut 26, 26' einen geschwungenen Verlauf auf derart, dass die Hebelwirkung des Schubelementes 23 im Bereich der Schliessstellung erhöht wird. Dies wird insbesondere durch eine im Bereich der Schliessstellung nach innen laufende Führungsnut 26, 26' erreicht.

Es versteht sich, dass anstelle der verschiebbar gelagerten ersten Drehzapfen 24, 24' ebenso gut die Kolbenführungen 21, 21' mit ihrem jeweiligen Kolben 19, 19' gelenkig verbunden sind, damit die jeweilige Rolle 25, 25' an der jeweiligen äusseren 20,20', resp. inneren 22, 22' Lauffläche der jeweiligen geschwungenen Führungsnut 26, 26' entlang rollen kann, resp. sich abstützen kann.

In einer bevorzugten Ausführungsform ist der erfindungsgemässe Drehantrieb zweiteilig aufgebaut, d.h. kann das druckdichte Gehäuse 10 in Längsrichtung geöffnet und verschlossen werden, insbesondere um die Fertigung einer geschwungenen Führungsnut 26, 26' und den Unterhalt des Drehantriebs zu vereinfachen.

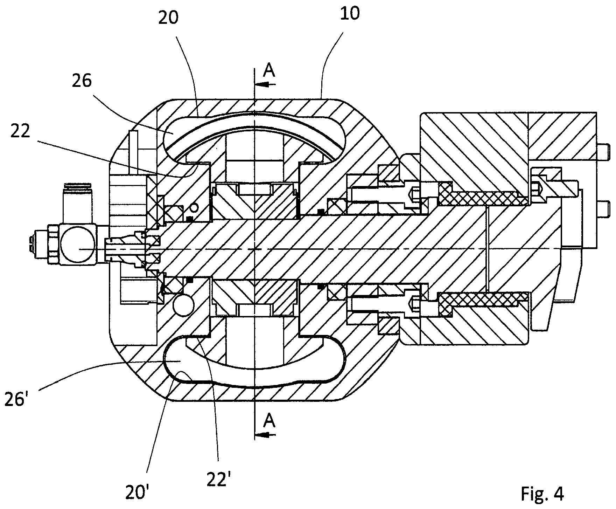

Der in Fig. 4 dargestellte Querschnitt durch einen erfindungsgemässen Drehantrieb verdeutlicht die Anordnung der erfindungsgemässen Führungsnut 26, 26' und deren Funktion. Insbesondere übt die äussere Lauffläche 20,20' beim Schliessen eine Gegenkraft aus und übt die innere Lauffläche 22, 22'diese Gegenkraft beim Öffnen aus. Vorteilhafterweise lässt sich das druckdichte Gehäuse 10 im Bereich der dargestellten Schnittebene A-A auftrennen.

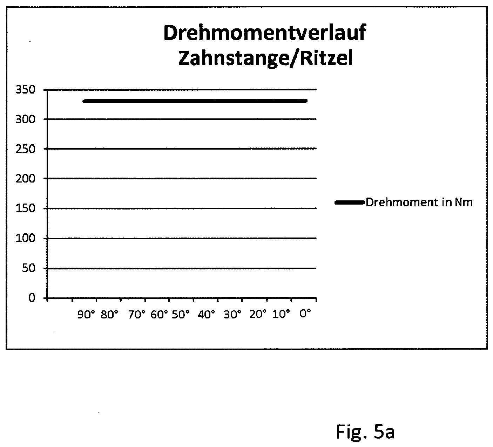

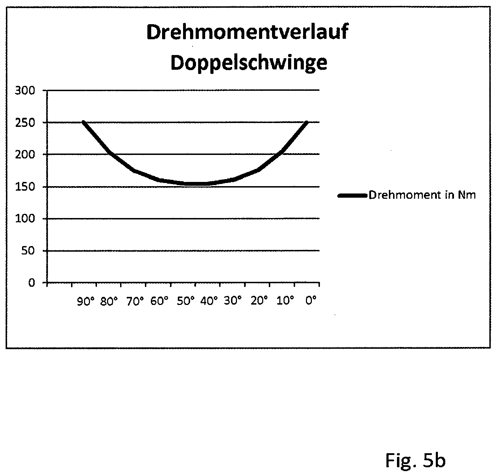

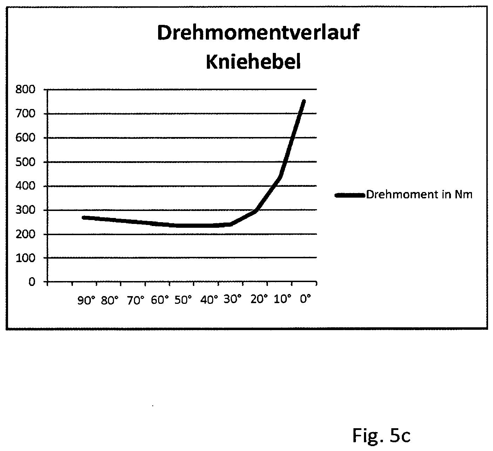

Die in Fig. 5a bis 5c aufgezeigten Graphen zum Verlauf des Drehmomentes zwischen der Offenstellung bei 90° und der Schliessstellung bei 0° erlauben den direkten Vergleich zwischen den bekannten Antriebs-Systemen und dem erfindungsgemässen Drehantrieb. Diese Gegenüberstellung macht deutlich, dass das Drehmoment, wie in Fig. 5a dargestellt, bei einem Drehantrieb mit einem Zahnstange-/Ritzel-Aufbau ein konstantes Drehmoment über die ganze Drehbewegung zwischen Offen- und Schliessstellung zeigt, während das Drehmoment, wie in Fig. 5b dargestellt, bei einem Drehantrieb mit einer Doppelschwinge zwischen der Offenstellung bei 90° und der Schliessstellung bei 0° merklich einbricht, und wobei das Drehmoment, wie in Fig. 5c dargestellt, bei einem erfindungsgemässen Drehantrieb mit einem Kniehebel-Mechanismus in der Schliessstellung bei 0° einen deutlich höheren Wert aufweist als in der Offenstellung bei 90°. Der Verlauf des Drehmomentvermögens erweist sich als überproportional, d.h. progressiv ansteigend zur Schliessstellung bei 0°.

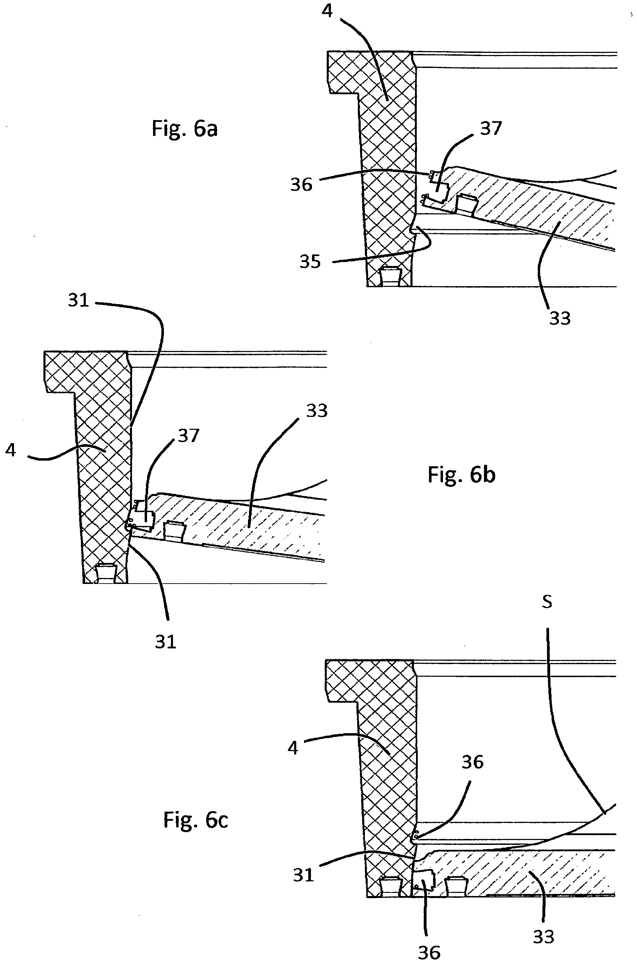

In einer Weiterbildung des erfindungsgemässen Drehantriebs 1 wird dieser mit einem Absperrorgan 33 verbunden, welches an seiner Peripherie eine Sammelnut 37 aufweist. Vorzugsweise kann der Förderkanal 31 des oberen Kupplungsteils 4 mit einer Abstreifkante 35 versehen sein, um pulverförmiges Schüttgut 36 von der Peripherie des Absperrorgans 33 abzustreifen. Fig. 6a bis 6c machen die Wirkungsweise der im peripheren Bereich des Absperr-Organs 33 vorgesehenen Abstreifkante 35 deutlich. Beim Abfüllen eines pulverigen Schüttgutes 36 lässt sich nicht vermeiden, dass davon Rückstände auf der Peripherie des Schliess- resp. Absperr-Organs 33 liegen bleiben. Diese Rückstände werden beim Schliessen an der Abstreifkante 35 abgestreift und bleiben entweder auf der Abstreifkante 35 oder in der Sammel-Nut 37 liegen derart, dass keine Schüttgutrückstände an die Aussenseite gelangen können. Dabei wird auf die genaue Formgebung des Förderkanals 31 geachtet, welcher im Bereich der Schliessstellung S derart ausgebildet, dass die Peripherie des Absperrorgans 33 und die Innenwand des Förderkanals 31 passgenau aneinander liegen.

In einer weiteren Ausführungsform ist zwischen den Kolben 19, 19' und der jeweiligen Gehäuse-Rückwand 18,18' ein federelastisches Element vorgesehen, welches die Schliessbewegung der Kolben 19,19' unterstützt und bei einem ungewollten Druckabfall die Absperr-Vorrichtung in seine Schliessstellung bringt.

Es versteht sich, dass der erfindungsgemässe Drehantrieb für alle möglichen Absperr-Vorrichtungen verwendbar ist, insbesondere für solche, wie sie in der Pharmaindustrie, im Lüftungsbau, bei Kraftwerken, in der Lebensmittelindustrie, etc. zum Einsatz kommen.

Die Vorteile des erfindungsgemässen Drehantriebs sind dem Fachmann unmittelbar ersichtlich und insbesondere in der zweckmässigen Wirkungsweise und der einfachen, d.h. fertigungs- und wartungsfreundlichen Konstruktion zu sehen. Der progressive Anstieg des Drehmomentvermögens beim Schliessen erlaubt den Bau von Drehantrieben mit geringer Baugrösse, welche damit auch leichtgewichtig und platzsparenden ausgelegt werden können. Die Konstruktion des erfindungsgemässen Drehantriebs erlaubt es, den Verlauf der Schliesskraft in einfacher Weise an die Kundenbedürfnisse anzupassen.

### Bezugszeichenliste:

- 1: Drehantrieb
- 2: Absperr-Vorrichtung
- 3: Förderkanal
- 4: oberes Kupplungsteil
- 4': unteres Kupplungsteil
- 6, 6': Verriegelungselement
- 7: manueller Antrieb
- 8: Absperr-Klappe
- 9: Antriebswelle
- 10: Gehäuse
- 18, 18': Gehäuse-Rückwand
- 19, 19': Kolben
- 20, 20': äussere Lauffläche
- 21, 21': Kolbenführung
- 22, 22': innere Lauffläche
- 23, 23': Schubelement
- 24, 24': erster Drehzapfen
- 25, 25': Rolle
- 26, 26': Führungsnut
- 27: Antriebselement
- 28, 28': zweiter Drehzapfen
- 31: Förderkanal
- 33: Absperrorgan
- 35: Abstreifkante
- 36: Schüttgut
- 37: Sammelnut
- S: Schliessstellung

## Patentansprüche

1. Pneumatischer Drehantrieb (1) für ein Absperr-Organ (8, 33) zum Schliessen und Öffnen eines Förderkanals (3) einer Absperr-Vorrichtung (2), welches Absperr-Organ (8, 33) über eine Antriebswelle (9) betätigbar ist und welcher Drehantrieb (1) zwei in einem druckdichten Gehäuse (10) gegenläufig und synchron bewegbare Kolben (19, 19') aufweist, welche je über eine Mitnehmeranordnung (21, 23, 27) mit der Antriebswelle (9) koppelbar sind derart, dass die Linearbewegung der Kolben (19, 19') in eine Drehbewegung der Antriebswelle (9) umgesetzt wird, wobei die Mitnehmeranordnung (21, 23, 27) zwei je mit einem der Kolben (19, 19') fest verbundene Kolbenführung (21, 21') und ein mit der Antriebswelle (9) fest verbindbares Antriebselement (27) umfasst, *wobei* die Mitnehmer-Anordnung (21, 23, 27) ein Kniehebelmechanismus ist, wobei zwischen den jeweiligen Kolbenführungen (21, 21') und dem Antriebselement (27) je ein Schubelement (23, 23') angeordnet ist, welches mit der jeweiligen Kolbenführung (21, 21') und mit dem Antriebselement (27) über erste (24, 24') und zweite (28, 28') Drehzapfen gelenkig verbunden ist, um zwischen den Kolben (19, 19') und dem Antriebselement (27) den Kniehebelmechanismus zu bilden, **dadurch gekennzeichnet, dass** zur Abstützung der Querkräfte die ersten Drehzapfen (24, 24') mit mindestens einer konzentrischen Rolle (25, 25'), insbesondere mit einem Rollenlager versehen sind,
*und*
die Rollen (25, 25') in einer Führungsnut (26, 26') entlang einer inneren (22, 22') resp. äusseren (20, 20') Lauffläche geführt sind.

2. Pneumatischer Drehantrieb (1) nach Anspruch *1*, **dadurch gekennzeichnet, dass** die Kolbenführung (21, 21') gelenkig mit dem Kolben (19, 19') verbunden ist und die Führungsnut (26, 26') einen geschwungen Verlauf aufweist derart, dass die Hebelwirkung des Schubelementes (23) im Bereich der Schliessstellung erhöht wird.

3. Pneumatischer Drehantrieb (1) nach Anspruch *1*, **dadurch gekennzeichnet, dass** erste Drehzapfen verschiebbar gelagert ist und die Führungsnut (26, 26') einen geschwungenen Verlauf aufweist derart, dass die Hebelwirkung des Schubelementes (23) im Bereich der Schliessstellung erhöht wird.

4. Pneumatischer Drehantrieb (1) nach einem der vorgehenden Ansprüche, **dadurch gekennzeichnet, dass** zwischen den Kolben (19, 19') und einer jeweiligen Gehäuse-Rückwand (18,18') ein federelastisches Element vorgesehen ist, welches die Schliessbewegung der Kolben (19,19') unterstützt und/oder die Absperr-Vorrichtung (2) bei einem ungewollten Druckabfall in seine Schliessstellung bringt.

5. Pneumatischer Drehantrieb (1) nach einem der vorgehenden Ansprüche, **dadurch gekennzeichnet, dass** das druckdichte Gehäuse (10) kolbenmittig und senkrecht zur Antriebswelle (9) trennbar ist.

## Claims

1. Pneumatic rotary actuator (1) for a shut-off valve (8, 33) for closing and opening a feed channel (3) of a shut-off device (2), said shut-off valve (8, 33) being actuated via a drive shaft (9) and said rotary actuator (1) having two pistons (19, 19') capable of moving inversely and synchronously in a pressure-tight housing (10) and each being connectable to the drive shaft (9) via a drive arrangement (21, 23, 27) in such a manner that the linear motion of the pistons (19, 19') is translated into a rotary motion of the drive shaft (9), said drive arrangement (21, 23, 27) comprising two piston guides (21, 21'), each of which is firmly attached to one of the pistons (19, 19') and a drive element (27) that is firmly connectable to the drive shaft (9), *wherein*
the drive arrangement (21, 23, 27) is a toggle-lever mechanism, wherein a thrust element (23, 23') that is hinge-jointed to the respective piston guide (21, 21') and to the drive element (27) via first (24, 24') and second (28, 28') pivots, is arranged between each of the respective piston guides (21, 21') and the drive element (27) to form the toggle-lever mechanism between the pistons (19, 19') and the drive element (27), **characterized in that** the first pivots (24, 24') are provided with at least one concentric roller (25, 25'), in particular with a roller bearing, for supporting the transverse forces,
*and*
the rollers (25, 25') are guided in a guide slot (26, 26') along an inner (22, 22') or outer (20, 20') running surface.

2. Pneumatic rotary actuator (1) according to Claim 1, **characterized in that** the piston guide (21, 21') is hinge-jointed to the pistons (19, 19') and the guide slot (26, 26') exhibits a curved course so as to increase the lever action of the thrust element (23) in the region of the closed position.

3. Pneumatic rotary actuator (1) according to Claim 1, **characterized in that** the first pivot is slidably mounted and the guide groove (26, 26') exhibits a curved course so as to increase the lever action of the thrust element (23) in the region of the closed position,

4. Pneumatic rotary actuator (1) according to any of the preceding claims, **characterized in that** a resilient element that supports the closing motion of the pistons (19, 19') and brings the shut-off device (2) into its closed position in the event of an accidental pressure drop, is provided between the pistons (19, 19') and a respective back wall (18, 18') of the housing.

5. Pneumatic rotary actuator (1) according to any of the preceding claims, **characterized in that** the pressure-tight housing (10) is separable in the middle of the pistons and perpendicular to the drive shaft (9).

## Revendications

1. Entraînement rotatif (1) pneumatique pour un organe d'obturation (8, 33) servant à fermer et ouvrir un canal de refoulement (3) d'un dispositif d'obturation (2), lequel organe d'obturation (8, 33) peut être actionné par l'intermédiaire d'un arbre d'entraînement (9) et lequel entraînement rotatif (1) présente deux pistons (19, 19') pouvant être déplacés en sens inverse et de manière synchrone dans un boîtier (10) étanche à la pression, lesquels pistons peuvent être couplés à l'arbre d'entraînement (9) respectivement par l'intermédiaire d'un ensemble entraîneur (21, 23, 27) de telle manière que le déplacement linéaire des pistons (19, 19') est converti en un déplacement de rotation de l'arbre d'entraînement (9), dans lequel l'ensemble entraîneur (21, 23, 27) comprend deux systèmes de guidage de piston (21, 21') reliés de manière solidaire respectivement à un des pistons (19, 19') et un élément d'entraînement (27) pouvant être relié de manière solidaire à l'arbre d'entraînement (9), dans lequel l'ensemble entraîneur (21, 23, 27) est un mécanisme à levier coudé, dans lequel respectivement un élément de poussée (23, 23') est disposé entre les systèmes de guidage de piston (21, 21') respectifs et l'élément d'entraînement (27), lequel élément de poussée est relié de manière articulée au système de guidage de piston (21, 21') respectif et à l'élément d'entraînement (27) par l'intermédiaire de premiers (24, 24') et de deuxièmes (28, 28') pivots afin de former, entre les pistons (19, 19') et l'élément d'entraînement (27), le mécanisme à levier coudé,
**caractérisé en ce qu'**afin de supporter les forces transversales, les premiers pivots (24, 24') sont pourvus d'au moins un rouleau (25, 25') concentrique, en particulier d'un roulement à rouleaux,
et
les rouleaux (25, 25') sont guidés dans une rainure de guidage (26, 26') le long d'une surface de roulement intérieure (22, 22') ou extérieure (20, 20').

2. Entraînement rotatif (1) pneumatique selon la revendication 1, **caractérisé en ce que** le système de guidage de piston (21, 21') est relié de manière articulée au piston (19, 19'), et la rainure de guidage (26, 26') présente un profil arrondi de telle manière que l'action de levier de l'élément de poussée (23) est augmentée dans la zone de la position de fermeture.

3. Entraînement rotatif (1) pneumatique selon la revendication 1, **caractérisé en ce que** des premiers pivots sont montés de manière à pouvoir coulisser, et la rainure de guidage (26, 26') présente un profil arrondi de telle manière que l'action de levier de l'élément de poussée (23) est augmentée dans la zone de la position de fermeture.

4. Entraînement rotatif (1) pneumatique selon l'une quelconque des revendications précédentes, **caractérisé en ce qu'**est prévu, entre les pistons (19, 19') et une paroi arrière de boîtier (18, 18') respective, un élément élastique à la manière d'un ressort, qui soutient le déplacement de fermeture des pistons (19, 19') et/ou amène le dispositif d'obturation (2) dans sa position de fermeture dans le cas d'une chute de pression involontaire.

5. Entraînement rotatif (1) pneumatique selon l'une quelconque des revendications précédentes, **caractérisé en ce que** le boîtier (10) étanche à la pression peut être séparé au centre des pistons et de manière perpendiculaire par rapport à l'arbre d'entraînement (9).
